# EUROPÄISCHE PATENTSCHRIFT

(11) **EP 1 360 528 B1**
(45) Veröffentlichungstag und Bekanntmachung des Hinweises auf die Patenterteilung: **01.12.2004**
(21) Anmeldenummer: 02704578.0
(22) Anmeldetag: 11.01.2002
(51) Int. Cl.: G02B 5/02, G02B 5/32, G03H 1/04

(54) **VERFAHREN ZUR HERSTELLUNG VON LICHT STREUENDEN ELEMENTEN**
METHOD FOR PRODUCING LIGHT SCATTERING ELEMENTS
PROCEDE DE PRODUCTION D'ELEMENTS DIFFUSANT LA LUMIERE

(30) Priorität: 09.02.2001 DE 10105957
(43) Veröffentlichungstag der Anmeldung: 12.11.2003
(73) Patentinhaber: Fraunhofer-Gesellschaft zur Förderung der angewandten Forschung e.V., 80686 München (DE)
(72) Erfinder: BOERNER Volkmar, 79100 Freiburg (DE); GOMBERT, Andreas, 79100 Freiburg (DE); BLÄSI Benedikt, 79102 Freiburg (DE)
(74) Vertreter: Gagel, Roland, Dr.
(86) Internationale Anmeldenummer: PCT/DE2002/000070
(87) Internationale Veröffentlichungsnummer: WO 2002/065166

(56) Entgegenhaltungen:
- US-A- 3 708 217
- US-A- 4 602 843
- PATENT ABSTRACTS OF JAPAN vol. 2000, no. 11, 3. Januar 2001 (2001-01-03) -& JP 2000 214311 A (TOPPAN PRINTING CO LTD), 4. August 2000 (2000-08-04)
- PATENT ABSTRACTS OF JAPAN vol. 2000, no. 12, 3. Januar 2001 (2001-01-03) -& JP 2000 241888 A (DENSO CORP;NIPPON SOKEN INC), 8. September 2000 (2000-09-08)

## Beschreibung

### Technisches Anwendungsgebiet

Die vorliegende Erfindung betrifft ein Verfahren zur Herstellung von Licht streuenden Elementen oder einer Prägevorlage hierfür durch holographische Belichtung einer Schicht aus einem photoempfindlichen Material auf einer Trägerplatte und anschließende Entwicklung der Schicht zur Erzeugung einer Oberflächenstruktur.

Licht streuende Elemente, wie sie mit dem vorliegenden Verfahren hergestellt werden, finden Anwendung insbesondere zur Visualisierung von Bildern oder Bildabläufen in der Projektionstechnik. In vielen Anordnungen zur Bilddarstellung werden Licht streuende Elemente in Form von Mattscheiben benutzt, auf die ein Bild projiziert wird. Das Licht, das zur Bilderzeugung auf die Mattscheibe trifft, wird von dieser zerstreut, also in unterschiedliche Richtungen abgelenkt. Durch diese Streuung wird erreicht, dass das auf die Mattscheibe projizierte Bild aus unterschiedlichen Richtungen erkennbar ist. So werden Streu- bzw. Mattscheiben beispielsweise in Kleinbild-Spiegelreflexkameras oder in Mittelformatkameras eingesetzt. Auch bei Rück- oder Frontprojektionssystemen ist ein Licht streuendes Element in Form einer großformatigen Leinwand oder einer Mattscheibe, auf die das Bild projiziert wird, erforderlich. Das Lichtfeld, das die Leinwand bzw. Mattscheibe verlässt, ist aufgrund der Lichtstreuung diffus, so dass diese Licht streuenden Elemente auch als Diffusoren bezeichnet werden.

Ein Diffusor kann entweder in Transmission, beispielsweise bei Rückprojektionssystemen, oder in Reflexion, beispielsweise bei Frontprojektionssystemen, betrieben werden. In der vorliegenden Patentanmeldung wird mit Diffusor jeweils ein plattenförmiges Element bzw. eine Scheibe aus einem Material bezeichnet, das einfallende gerichtete Lichtstrahlung durch Volumenoder durch Oberflächenstreuung zerstreut.

Eine wesentliche Eigenschaft von Diffusoren ist deren Streuprofil, das die winkelaufgelöste Streueffizienz bei senkrecht auf den Diffusor einfallender kollimierter Lichtstrahlung zeigt. Die Streueffizienz ist definiert als die unter einem bestimmten Austrittswinkel gemessene relative Intensität der Streustrahlung normiert auf die gemessene Intensität unter dem Austritts- bzw. Blickwinkel 0. Ein komplettes zweidimensionales Streuprofil umfasst die Streueffizienz für den gesamten Halbraum. In der Regel kann ein Diffusor durch zwei eindimensionale Streuprofile in horizontaler bzw. x-Richtung und vertikaler bzw. y-Richtung ausreichend charakterisiert werden. Ein Diffusor, dessen x- und y-Streuprofil annähernd gleich sind, wird als symmetrischer Diffusor bezeichnet. Bei stark unterschiedlichen Streuprofilen für x- und y-Richtung handelt es sich um einen asymmetrischen Diffusor.

Das Streuprofil eines Diffusors muss an die beabsichtigte Anwendung angepasst sein. Für jede Anwendung ergibt sich aus den geometrischen Gegebenheiten und der beabsichtigten optischen Wirkung ein spezifischer Blickwinkelbereich. So ist bei großformatigen Projektionsbildschirmen in der Regel ein asymmetrischer Blick- bzw. Streuwinkelbereich erforderlich, bei dem der horizontale Blickwinkel größer als der vertikale Blickwinkel ausfallen sollte.

Im Idealfall besteht das Streuprofil eines Diffusors aus einer Rechteckfunktion. In diesem Falle wäre das Bild innerhalb des spezifischen Blickwinkelbereiches immer gleich hell und homogen ausgeleuchtet. Auf der anderen Seite geht keinerlei Strahlung durch Streuung in Winkel außerhalb des Blickwinkelbereiches verloren.

Die in der Praxis eingesetzten Diffusoren weisen jedoch herstellungsbedingt kein rechteckiges sondern in der Regel ein gaußförmiges Streuprofil auf. Für die meisten Anwendungen ist es jedoch wünschenswert, Diffusoren mit möglichst abgeflachten Streuprofilen herstellen zu können, die dem Idealfall eines rechteckigen Profils näher kommen.

### Stand der Technik

Zur Herstellung von Diffusoren sind unterschiedliche Techniken bekannt. So können Diffusoren, deren Funktion auf Oberflächenstreuung beruht, durch mechanische Bearbeitung der Oberfläche, wie beispielsweise Sandstrahlen, oder durch chemische Bearbeitung der Oberfläche, beispielsweise durch einen Ätzprozess, mit einer streuenden Oberflächenstruktur versehen werden. Mit diesen Techniken lassen sich in der Regel jedoch nur symmetrische Diffusoren mit gaußförmigem Streuprofil herstellen. Eine zuverlässige Möglichkeit zur gezielten Beeinflussung des Streuprofils ist bei diesen Techniken nicht bekannt.

Eine bekannte Möglichkeit zur kostengünstigen Massenproduktion geeigneter Oberflächenstrukturen für die Herstellung von Diffusoren besteht im Einsatz von formbaren Materialien, wie beispielsweise Polymeren, in Verbindung mit einem Replikationsprozess. Bei der Replikationstechnik wird dem Polymerkörper mit einer geeignet strukturierten Prägevorlage eine Oberflächenstruktur eingeprägt, aus der das Streuverhalten resultiert..

Zur Herstellung der Prägevorlage, die nur einmal hergestellt werden muss, kann ein beliebiger Oberflächenbearbeitungsprozess genutzt werden, darunter die oben beschriebenen. Bedingung für die Abformbarkeit ist, dass die Oberflächenstruktur keine Hinterschnitte aufweist.

Unter anderem kann die Prägevorlage durch Belichtung einer Photoresistschicht mit einem gestreuten Lichtfeld und anschließende Entwicklung der Photoresistschicht hergestellt werden. Die resultierende Photoresiststruktur wird dann, beispielsweise durch galvanisches Abformen, in die Prägevorlage übertragen. Die mit dieser Technik in Kombination mit Prägetechniken hergestellten Diffusoren reproduzieren das Streuprofil des eingestrahlten (gestreuten) Lichtfeldes, das wiederum mit Hilfe eines Diffusors, im Folgenden als Primärdiffusor bezeichnet, generiert wurde. Die Breite des resultierenden Streuprofils hängt dabei von der Geometrie des Aufbaus ab. Die Form des Streuprofils der hergestellten Diffusoren ist jedoch abhängig vom Streuprofil des Primärdiffusors und in der Regel wiederum annähernd gaußförmig.

Für die Erzeugung von asymmetrischen Diffusoren sind insbesondere auf Volumenholographie basierende Belichtungstechniken bekannt, mit denen eine Brechungsindexmodulation im Volumen einer lichtempfindlichen Schicht erzeugt wird. Die damit hergestellten Diffusoren arbeiten nach dem Prinzip der Volumenstreuung.

So wird in der US 5,365,354 ein Verfahren zur Herstellung von asymmetrischen Diffusoren beschrieben, bei dem ein Lichtfeld durch einen Primärdiffusor geleitet und in ein lichtempfindliches Material belichtet wird. Mit dem lichtempfindlichen Material wird durch die Bestrahlung ein Volumenhologramm aufgenommen. Bei erneuter Bestrahlung mit Licht wirkt das Volumenhologramm seinerseits durch Rekonstruktion des aufgenommenen Primärdiffusors streuend. In einer weiteren Ausgestaltung dieses Verfahrens werden zwei diffuse Lichtbündel aus unterschiedlichen Richtungen eingestrahlt, um einen so genannten Multiplex-Diffusor herzustellen. Bei einem Multiplex-Diffusor ist das Diffusionsverhalten in verschiedenen Richtungen unterschiedlich, da unter einem bestimmten Einfallswinkel nur das Hologramm des einen und unter einem anderen Einfallswinkel nur das Hologramm des anderen Lichtbündels rekonstruiert wird. Eine derartige Technik ist nur durch Erstellung von Volumenhologrammen möglich und erfordert, dass die beiden Wellenfelder der beiden Lichtbündel nicht zueinander kohärent sind. Das Verfahren der US 5,365,354 führt jedoch in der Regel wiederum zu gaußförmigen oder nahezu gaußförmigen Streuprofilen, da die Form des Streuprofils des im Belichtungsaufbau benutzten Primärdiffusors dupliziert wird.

Die US 3,708,217 beschreibt ebenfalls eine Technik zur Aufnahme eines Volumenhologrammes für die Herstellung von asymmetrischen Diffusoren. Bei diesem Verfahren wird auf einer lichtempfindlichen Schicht eine Referenzwelle mit einer Objektwelle überlagert, die durch einen Primärdiffusor geleitet wurde, um ein Volumenhologramm herzustellen. Durch geeignete räumliche Anordnung des Primärdiffusors zur lichtempfindlichen Schicht lässt sich ein stark richtungsabhängiges Streuprofil erzeugen. Die Verwendung einer ebenen Referenzwelle führt jedoch dazu, dass die optische Transferfunktion des Volumenhologrammes einen stark periodischen Anteil aufweist, der zu unerwünschten Farbeffekten beim Einsatz dieses Diffusors führen kann. Weiterhin wird in dieser Druckschrift keine Lösung angeboten, mit der ein möglichst flaches Streuprofil realisiert werden könnte.

In D.J. Schertler et al., Applied Optics 38 No. 2, 1999, Seiten 291 - 303, ist eine Technik zur Erzeugung eines abgeflachten Streuprofils beschrieben, bei der eine Kombination eines eindimensionalen Phasenbeugungsgitters mit einem symmetrisch streuenden Diffusor eingesetzt wird. Diese beiden Komponenten können dabei entweder als Einzelkomponenten hintereinander angeordnet oder in Form der beiden Oberflächen eines transparenten Trägermaterials ausgebildet sein. Die Diffusoroberfläche wurde hierbei mit einer Ätztechnik, die Gitteroberfläche mit einer Photoresisttechnik erzeugt. Die Bereitstellung eines derartigen Diffusors ist jedoch aufgrund der Notwendigkeit der Herstellung zweier Komponenten bzw. zweier unterschiedlich geformter Oberflächen sehr aufwendig. Weiterhin entstehen bei Einstrahlung von Weißlicht in einen derartigen Diffusor häufig unerwünschte Farbeffekte aufgrund des streng periodischen Beugungsgitters.

Ausgehend von diesem Stand der Technik liegt der Erfindung die Aufgabe zugrunde, ein einfaches Verfahren zur Herstellung eines Licht streuenden Elementes bzw. Diffusors anzugeben, mit dem zumindest in einer Dimension ein abgeflachtes Streuprofil erreicht werden kann.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche.

Beim vorliegenden Verfahren wird durch holographische Belichtung einer Schicht aus einem photoempfindlichen Material auf einer Trägerplatte und anschließende Entwicklung dieses Materials eine Oberflächenstruktur erzeugt, die entweder direkt als Diffusor oder als Ausgangsstruktur zur Erzeugung einer Vorlage für die Herstellung eines Diffusors eingesetzt werden kann. Erfindungsgemäß erfolgt die Belichtung der Schicht mit zumindest zwei zueinander kohärenten und durch einen oder mehrere Diffusoren hindurchgetretenen bzw. an einem oder mehreren reflektierenden Diffusoren reflektierte Lichtbündeln, die aus unterschiedlichen Richtungen eingestrahlt und unter Bildung eines Interferenzmusters auf der Schicht zumindest teilweise überlagert werden.

Vorzugsweise wird hierbei in jeden Strahlengang der zumindest zwei Lichtbündel ein Primärdiffusor eingesetzt. Es ist jedoch auch möglich, ein durch einen Primärdiffusor hindurchgetretenes Lichtbündel in zwei Teilstrahlen aufzuspalten und mit diesen das photoempfindliche Material zu belichten.

Als Primärdiffusoren können hierbei geeignete Streuscheiben mit gaußförmigem oder anderem Streuprofil eingesetzt werden. Durch die Überlagerung der beiden gestreuten Lichtbündel unter Bildung eines Interferenzmusters auf der photoempfindlichen Schicht wird in vorteilhafter Weise eine Abflachung des Streuprofils des damit hergestellten Diffusors erreicht.

Die Beeinflussung dieses Streuprofils kann dabei durch spezielle Wahl der Primärdiffusoren, durch Variation des Einfallswinkels der Lichtbündel oder durch den Einsatz weiterer kohärenter Lichtbündel, die gegebenenfalls ebenfalls durch Primärdiffusoren geleitet werden, erfolgen. Selbstverständlich lassen sich auch weitere Lichtbündel einsetzen, die nicht zu den anderen Lichtbündeln kohärent sind, um hierdurch gegebenenfalls besondere Streueffekte zu erzielen.

Je nach gewünschtem Streuprofil können sowohl divergente, annähernd parallele oder auch konvergente Lichtbündel zur Überlagerung auf der lichtempfindlichen Schicht eingesetzt werden. Als lichtempfindliche Schicht wird hierbei bevorzugt ein Photoresist eingesetzt, der nach der Entwicklung das gewünschte Oberflächenrelief aufweist. Dieses Oberflächenrelief kann anschließend durch eine geeignete Ätztechnik in die darunter befindliche Trägerplatte, beispielsweise aus Glas, einkopiert werden. Vorzugsweise wird das Oberflächenrelief der Photoresiststruktur jedoch in ein geeignetes Material umkopiert, das dann als Prägevorlage zur eigentlichen Erzeugung der Diffusoren dient. Hierfür kommt beispielsweise eine Abformtechnik, wie das galvanische Abformen in Nickel, in Frage. Mit der auf diese Weise generierten Prägevorlage können dann Scheiben aus einem prägefähigen Material, wie beispielsweise einem Polymer, geprägt werden, um die gewünschte Oberflächenstruktur und damit das gewünschte Streuprofil der Polymerscheiben zu erhalten. Derartige Replikationstechniken sind dem Fachmann bekannt, so dass in der vorliegenden Patentanmeldung nicht näher darauf eingegangen wird.

### Kurze Beschreibung der Zeichnungen

Das vorliegende Verfahren wird nachfolgend anhand eines Ausführungsbeispiels in Verbindung mit den Zeichnungen ohne Beschränkung des allgemeinen Erfindungsgedankens nochmals kurz erläutert. Hierbei zeigen:
- Fig. 1: einen möglichen Aufbau zur Erzeugung des Oberflächenhologramms gemäß dem vorliegenden Verfahren;
- Fig. 2: ein Streuprofil eines herkömmlichen Diffusors mit gaußförmiger Verteilung;
- Fig. 3: zwei beispielhafte Streuprofile von Diffusoren, die mit dem vorliegenden Verfahren hergestellt wurden;

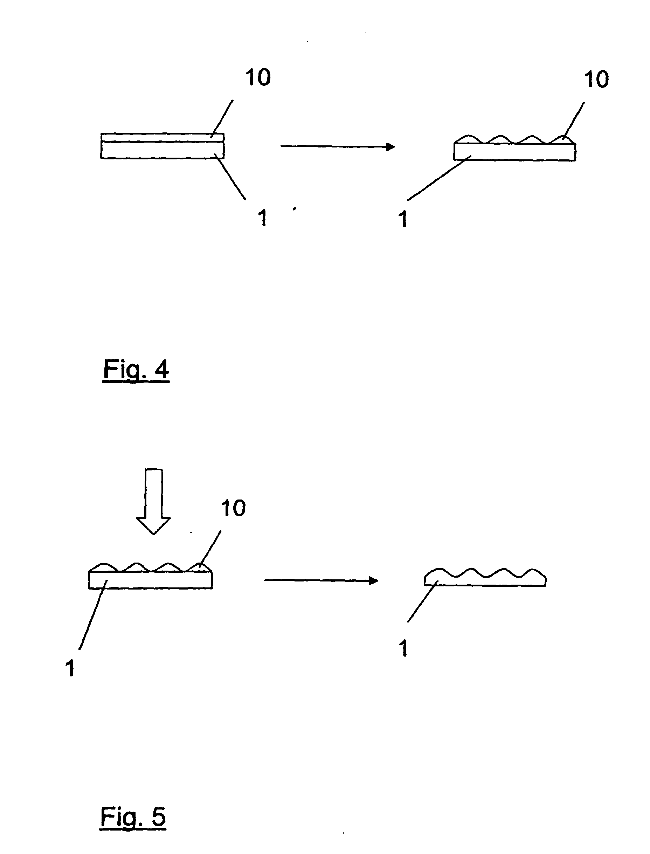

- Fig. 4: stark vereinfacht eine Trägerplatte (1) mit der darauf befindlichen Schicht (10) vor und nach der Entwicklung der Schicht (10);
- Fig. 5: schematisch die Übertragung der Oberflächenstruktur der Schicht (10) durch einen Ätzprozess in die Trägerplatte (1) ;

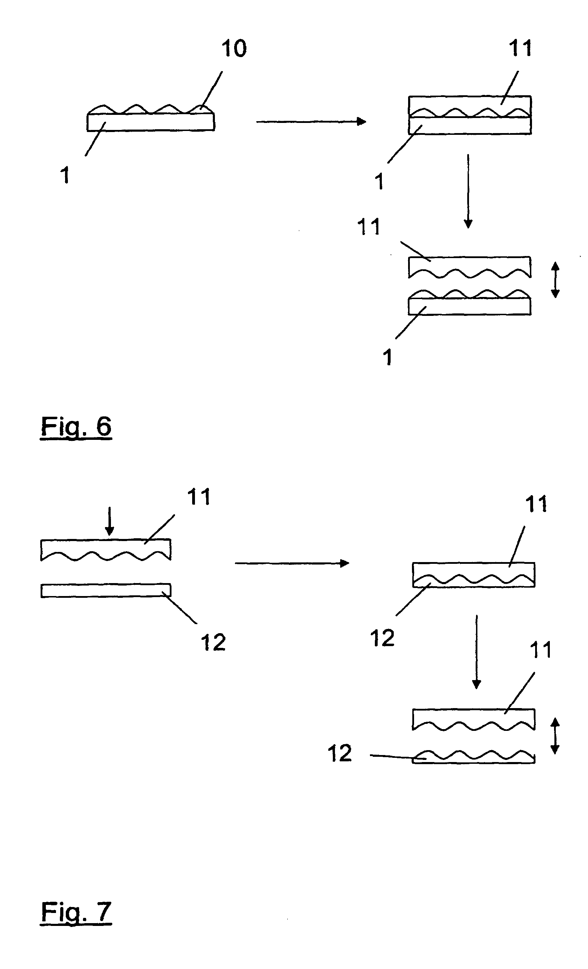

- Fig. 6: schematisch die Übertragung der Oberflächenstruktur durch einen Abformprozess in eine Form (11), die als Prägevorlage zur Prägung der Oberfläche von Licht streuenden Elementen dient;
- Fig. 7: schematisch das Prägen einer Oberfläche von Platten oder Folien (12) aus einem prägbaren Material mit der Prägevorlage zur Erzeugung von Licht streuenden Elementen.

### Wege zur Ausführung der Erfindung

Das vorliegende Verfahren nutzt die Technik der Holographie zur Herstellung von Oberflächenreliefs durch holographische Belichtung eines geeigneten photoempfindlichen Materials auf einer Trägerplatte, im Folgenden Photoplatte genannt, das nach einem anschließenden Ätzvorgang in Abhängigkeit von der Belichtung ein Oberflächenrelief ausbildet, um einen Diffusor mit abgeflachtem Streuprofil herzustellen. Das belichtete photoempfindliche Material wird anschließend entwickelt, um ein Oberflächenrelief zu erzeugen, das sich direkt als Diffusor eignet oder durch Umkopieren als Prägevorlage für einen Diffusor eingesetzt werden kann. Bei dem Verfahren wird durch die Überlagerung der zumindest zwei zueinander kohärenten und durch mindestens einen Primärdiffusor hindurch getretenen bzw. an mindestens einem Primärdiffusor reflektierten Lichtbündel ein Interferenzfeld auf dem photoempfindlichen Material erzeugt und durch den Entwicklungsschritt in eine Oberflächenmodulation umgewandelt.

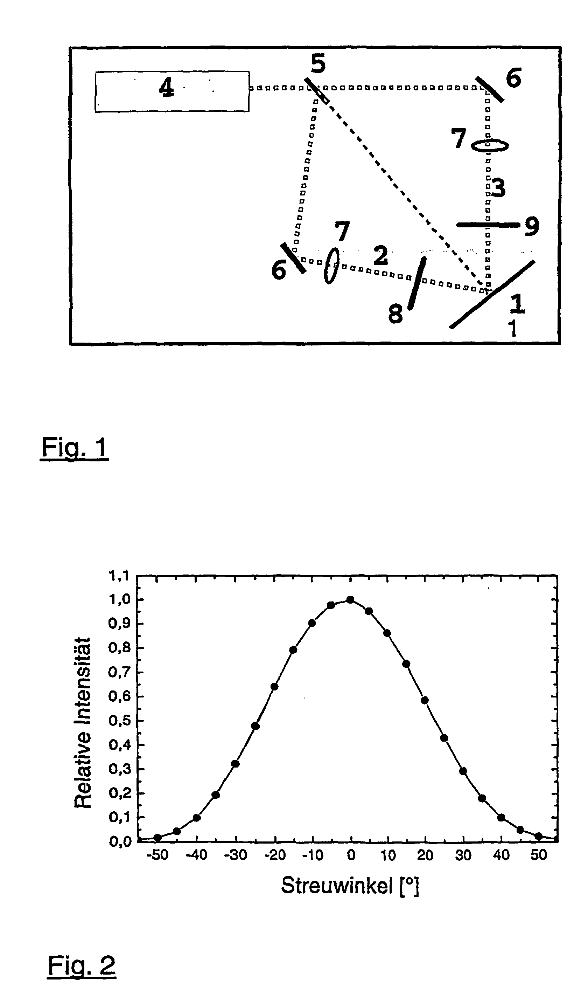

Figur 1 zeigt eine beispielhafte Anordnung zur Belichtung der nicht erkennbaren photoempfindlichen Schicht auf einer Photoplatte 1 durch Überlagerung der beiden Lichtbündel 2 und 3. Die beiden Lichtbündel 2 und 3 werden von einem Laser 4 mit nachfolgendem Strahlteiler 5 erzeugt und über Strahlumlenkelemente 6 sowie Strahlformungselemente 7, wie beispielsweise Linsen, durch zwei Primärdiffusoren 8, 9 auf die Photoplatte 1 gerichtet. Geeignete Belichtungszeiten, die in der Regel im Minutenbereich liegen, sind dem Fachmann je nach eingesetztem Photoresist bekannt. Im vorliegenden Beispiel treffen die beiden Lichtbündel 2 und 3 aufgeweitet auf die Photoplatte 1.

Nach der Belichtung und Entwicklung der Photoresistschicht auf der Photoplatte 1 wird die Oberflächenstruktur durch galvanisches Abformen auf eine Platte oder Folie aus Nickel übertragen. Diese Platte dient dann als Prägevorlage für Polymerfolien bzw. -platten, die nach dem Prägevorgang die Diffusoren bilden. Die Oberflächenstrukturen sind bei dieser Technik in der Regel größer als die Wellenlängen, bei denen die Diffusoren zum Einsatz kommen.

Figur 2 zeigt beispielhaft ein Streuprofil eines Diffusors, der mit der Technik der Volumenholographie durch Belichtung mit einem durch einen Primärdiffusor hindurchgetretenen Strahl hergestellt wurde. Ein derartiges gaußförmiges Streuprofil tritt herstellungsbedingt bei den meisten Diffusoren auf.

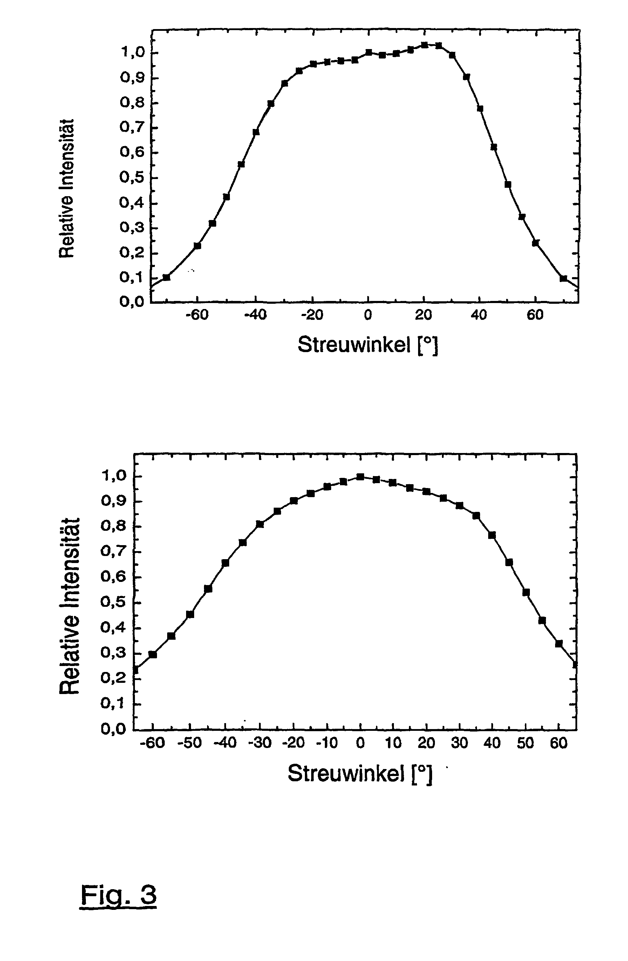

Im Gegensatz dazu zeigt Figur 3 zwei Beispiele für eindimensionale Streuprofile von Diffusoren, die mit dem vorliegenden Verfahren hergestellt wurden. Aus den Abbildungen ist sehr deutlich der im Vergleich zum gaußförmigen Profil abgeflachte Verlauf der winkelabhängigen Streueffizienz zu erkennen.

Während es bei symmetrischen Diffusoren in den meisten Fällen sinnvoll ist, das Profil in beiden Richtungen abzuflachen, kann es die beabsichtigte Anwendung bei asymmetrischen Diffusoren erfordern, wie beispielsweise beim Einsatz als Projektionsbildschirm, nur eines der beiden Streuprofile zu optimieren.

Eine Abflachung des Streuprofils in beiden Dimensionen lässt sich mit dem vorliegenden Verfahren beispielsweise dadurch realisieren, dass die Belichtung in mehreren Schritten durchgeführt wird, wobei die Photoplatte zwischen den beiden Belichtungen gedreht wird.

### Bezugszeichenliste

- 1: Trägerplatte bzw. Photoplatte
- 2, 3: kohärente Lichtbündel
- 4: Laser
- 5: Strahlteiler
- 6: Strahlumlenkelemente
- 7: Strahlformungselemente
- 8, 9: Primärdiffusoren
- 10: Schicht aus einem photoempfindlichen Material
- 11: Form
- 12: Platte bzw. Folie aus einem prägbaren Material

## Patentansprüche

1. Verfahren zur Herstellung von Licht streuenden Elementen oder einer Prägevorlage hierfür durch holographische Belichtung einer Schicht (10) aus einem photoempfindlichen Material auf einer Trägerplatte (1) und anschließende Entwicklung der Schicht (10) zur Erzeugung einer Oberflächenstruktur, wobei die Belichtung mit zumindest zwei zueinander kohärenten Lichtbündeln (2, 3) erfolgt, die aus unterschiedlichen Richtungen eingestrahlt und unter Bildung eines Interferenzmusters auf der Schicht (10) zumindest teilweise überlagert werden,
**dadurch gekennzeichnet,**
**dass** beide Lichtbündel (2, 3) durch einen oder mehrere Primärdiffusoren (8, 9) hindurch getreten sind bzw. an einem oder mehreren Primärdiffusoren reflektiert wurden, bevor sie zur Bildung des Interferenzmusters auf der Schicht (10) überlagert werden.

2. Verfahren nach Anspruch 1,
**dadurch gekennzeichnet,**
**dass** als photoempfindliches Material ein Photoresist eingesetzt wird.

3. Verfahren nach Anspruch 1 oder 2,
**dadurch gekennzeichnet,**
**dass** die Oberflächenstruktur durch einen anschließenden Ätzprozess in die Trägerplatte (1) übertragen wird.

4. Verfahren nach Anspruch 1 oder 2,
**dadurch gekennzeichnet,**
**dass** die Oberflächenstruktur durch einen anschließenden Abformprozess in eine Form (11) übertragen wird, die als Prägevorlage zur Prägung der Oberfläche von Licht streuenden Elementen (12) dient.

5. Verfahren nach Anspruch 4,
**dadurch gekennzeichnet,**
**dass** die Oberflächenstruktur durch einen galvanischen Abformprozess in eine Platte oder Folie aus Metall übertragen wird.

6. Verfahren nach Anspruch 4 oder 5,
**dadurch gekennzeichnet,**
**dass** mit der Prägevorlage zumindest eine Oberfläche von Platten oder Folien (12) aus einem prägbaren Material bzw. eine auf eine Trägerplatte aufgebrachte Schicht eines prägbaren Materials zur Erzeugung von Licht streuenden Elementen geprägt wird.

7. Verfahren nach einem der Ansprüche 1 bis 6,
**dadurch gekennzeichnet,**
**dass** die zumindest zwei zueinander kohärenten Lichtbündel (2, 3) mit einem Laser (4) erzeugt werden, dessen Ausgangsstrahl in die zumindest zwei Lichtbündel (2, 3) aufgeteilt wird.

8. Verfahren nach Anspruch 7,
**dadurch gekennzeichnet,**
**dass** ein Primärdiffusor (8, 9) im Strahlengang des Ausgangsstrahls eingesetzt wird.

9. Verfahren nach Anspruch 7,
**dadurch gekennzeichnet,**
**dass** jeweils zumindest ein Primärdiffusor (8, 9) in den nach der Aufspaltung des Ausgangsstrahls getrennten Strahlengängen der zumindest zwei Lichtbündel (2, 3) eingesetzt wird.

10. Verfahren nach einem der Ansprüche 1 bis 9,
**dadurch gekennzeichnet,**
**dass** Primärdiffusoren (8, 9) mit einem annähernd gaußförmigen Streuprofil eingesetzt werden.

11. Verfahren nach einem der Ansprüche 1 bis 10,
**dadurch gekennzeichnet,**
**dass** zumindest ein weiteres Lichtbündel zur Belichtung der Schicht (10) eingesetzt wird, das zu den zumindest zwei zueinander kohärenten Lichtbündeln (2, 3) nicht kohärent ist.

## Claims

1. A method for producing light-scattering elements or an impression template therefor by holographic illumination of a layer (10) of a photo-sensitive material on a support plate (1) and subsequent development of said layer (10) in order to generate a surface structure,
with illumination occuring by using at least two mutually coherent luminous beams (2,3) which are irradiated from different directions and which are at least partially superimposed on said layer (10) while forming an interference pattern,
**characterized in that**
both luminous beams (2,3) have passed through one or a plurality of primary diffusers (8,9) respectively were reflected at one or a plurality of primary diffusers before said luminous beams (2,3) are superimposed on said layer (10) to form the interference pattern.

2. A method according to claim 1,
**characterized in that**
a photoresist is utilized as said photosensitive material.

3. A method according to claim 1 or 2,
**characterized in that**
the surface structure is transferred to said support plate (1) by means of a subsequent etching process.

4. A method according to claim 1 or 2,
**characterized in that**
the surface structure is transferred to a template (11) by means of a subsequent copying process, said template (11) serving as the impression template for impressing the surface of light-scattering elements (12).

5. A method according to claim 4,
**characterized in that**
the surface structure is transferred to a plate or a foil composed of metal by means of a galvanic molding process.

6. A method according to claim 4 or 5,
**characterized in that**
the at least one surface of said plates or foils (12) composed of impressionable material respectively a layer of an impressionable material applied on a support plate is impressed with the impression template in order to generate light-scattering elements.

7. A method according to one of the claims 1 to 6,
**characterized in that**
said at least two mutually coherent luminous beams (2,3) are generated by a laser (4) whose initial beam is split into said at least two luminous beams (2,3).

8. A method according to claim 7,
**characterized in that**
a primary diffuser (8,9) is positioned in the beam path of the initial beam.

9. A method according to claim 7,
**characterized in that**
following splitting of the initial beam at least one said primary diffuser (8,9) is positioned in each of the split beam paths of said at least two luminous beams (2,3).

10. A method according to one of the claims 1 to 9,
**characterized in that**
said primary diffusers (8,9) having an approximately gaussian scatter profile are utilized.

11. A method according to one of the claims 1 to 10,
**characterized in that**
at least one additional luminous beam is employed for illuminating said layer (10), said additional luminous beam not being coherent to said at least two mutually coherent luminous beams (2,3).

## Revendications

1. Procédé de fabrication d'éléments diffusant la lumière ou d'une maquette d'estampage pour ceux-ci au moyen d'une irradiation holographique d'une couche (10) constituée d'une matière photosensible sur une plaque support (1) suivie par le développement de la couche (10) pour produire une structure de surface, l'irradiation se réalisant avec au moins deux faisceaux lumineux (2, 3) cohérents l'un par rapport à l'autre, qui sont rayonnés à partir de directions différentes et sont au moins partiellement superposés en formant un modèle d'interférence sur la couche (10),
**caractérisé en ce que**,
les deux faisceaux lumineux (2, 3) ont traversé un ou plusieurs diffuseurs primaires (8, 9) ou bien ont été réfléchis sur un ou plusieurs diffuseurs primaires, avant d'être superposés pour former le modèle d'interférence sur la couche (10).

2. Procédé selon la revendication 1,
**caractérisé en ce que**,
une résine photosensible est mise en oeuvre en tant que matière photosensible.

3. Procédé selon la revendication 1 ou 2,
**caractérisé en ce que**,
la structure de surface est transférée dans la plaque support (1) au moyen d'un processus subséquent d'attaque chimique.

4. Procédé selon la revendication 1 ou 2,
**caractérisé en ce que**,
la structure surfacique est transférée dans un moule (11) à l'aide d'un processus de moulage subséquent, qui sert de maquette d'estampage pour estamper des éléments (12) diffusant la lumière sur la surface.

5. Procédé selon la revendication 4,
**caractérisé en ce que**,
la structure surfacique est transférée dans une plaque ou feuille métallique à l'aide d'un processus de moulage galvanique.

6. Procédé selon la revendication 4 ou 5,
**caractérisé en ce que**,
avec la maquette d'estampage, au moins une surface de plaques ou feuilles (12) constituées d'une matière estampable ou une couche d'une matière estampable appliquée sur une plaque support sont estampées pour produire des éléments diffusant la lumière.

7. Procédé selon l'une quelconque des revendications1 à 6,
**caractérisé en ce que**,
lesdits au moins deux faisceaux lumineux (2, 3) cohérents l'un par rapport à l'autre sont produits par un laser (4) dont le faisceau de sortie est divisé en lesdits au moins deux faisceaux lumineux (2, 3).

8. Procédé selon la revendication 7,
**caractérisé en ce que**,
un diffuseur primaire (8, 9) est inséré dans la trajectoire des rayons du faisceau de sortie.

9. Procédé selon la revendication 7,
**caractérisé en ce que**,
au moins un diffuseur primaire (8, 9) est inséré à chaque fois dans les trajectoires des rayons desdits au moins deux faisceaux lumineux (2, 3), séparés après division du faisceau de sortie.

10. Procédé selon l'une quelconque des revendications1 à 9,
**caractérisé en ce que**,
des diffuseurs primaires (8, 9) ayant un profil de diffusion approximativement gaussien sont insérés.

11. Procédé selon l'une quelconque des revendicationsl à 10,
**caractérisé en ce que**,
au moins au autre faisceau lumineux est mis en oeuvre pour irradier la couche (10), lequel faisceau n'est pas cohérent par rapport auxdits au moins deux faisceaux lumineux (2, 3) cohérents l'un par rapport à l'autre.
